Europäisches Patentamt

European Patent Office

Office européen des brevets

(19)

(11) **EP 1 589 762 A1**

(12) **EUROPEAN PATENT APPLICATION**

(43) Date of publication:
26.10.2005 Bulletin 2005/43

(51) Int Cl.⁷: **H04N 7/26**, H04N 7/34

(21) Application number: 05102428.9

(22) Date of filing: 24.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 23.04.2004 KR 2004028079

(71) Applicant: **SAMSUNG ELECTRONICS CO., LTD.**
**Suwon-si Gyeonggi-do 442-742 (KR)**

(72) Inventor: **KOO, Jae-hoon**
**Gyeonggi-do (KR)**

(74) Representative: **Geary, Stuart Lloyd et al**
**Venner Shipley LLP**
**20 Little Britain**
**London EC1A 7DH (GB)**

(54) **Image compression with reduced block artefacts**

(57) An image compression apparatus and method for producing and using an assistant image for deblocking processing. The image compression apparatus has an assistant image generation unit for generating an assistant image by using an original image, an image compression part for compressing the generated original image and assistant image, and a deblocking processing part for applying the deblocking processing to the compressed original image by using the compressed assistant image. Since the deblocking processing is carried out in the image compression process, the image compression apparatus can prevent the blocking artifacts even in cases where a consumer's product for decompressing and reproducing the compressed images is not a deblocking means. Further, the existing general image compression encoder can be used without change, and the reduced computation amounts necessary for the deblocking processing can result in reducing the processing load, increasing a processing rate, and reducing power consumption of the processor.

FIG. 2

**Description**

The present invention relates to an image compression method comprising processing an input image signal to produce a set of coefficients, using, at least in respect of some coefficients, a process susceptible to producing block artefacts.

Image data files tend to be much larger than text data files. Therefore, in practice, a large amount of storage space is required for storing image data and a large amount of time is required to transfer image data.

Accordingly, in order to solve the above problems, image data compression technologies have been introduced, such as Joint Photographic Experts Group (JPEG), Moving Picture Experts Group (MPEG), H.261, H.264 and so on. With the use of such compression technologies, the amount of image data is greatly reduced and, therefore, the data storage and transfers can be efficiently carried out.

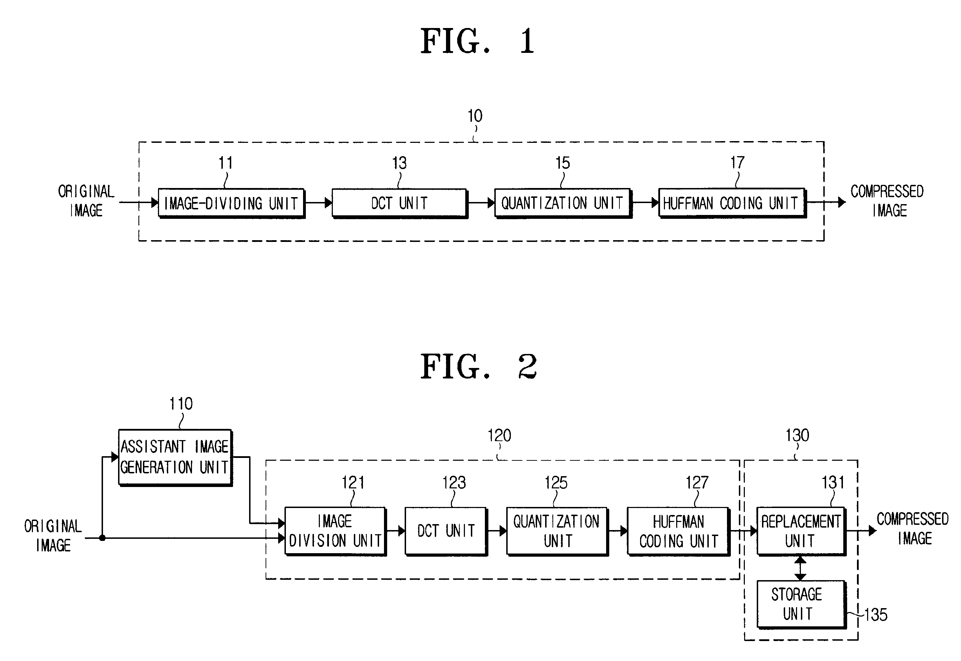

In general, such image compression is carried out by a one-chip encoder. Figure 1 is a block diagram illustrating such a conventional image compression encoder.

The image compression encoder processes input original images to compress them and outputs the images in a predetermined format. In Figure 1, the image compression encoder 10 has an image-dividing unit 11, a Discrete Cosine Transform (DCT) unit 13, a quantization unit 15 and a Huffman Coding unit 17.

An original image input into the image compression encoder 10 is divided by the image-dividing unit 11 into a plurality of blocks. The DCT unit 13 applies the DCT to the divided blocks in order, the quantization unit 15 quantizes the blocks and the Huffman Coding unit 17 then applies the Huffman Coding to the quantized blocks so that the original image is compressed.

As noted above, in order to compress an image, the input original image has to be divided into blocks, each having a certain size, such as 8x8 pixels, and a compression process has then to be applied to the divided blocks.

However, the above process can produce discontinuities at image block boundaries when the compressed image is decompressed and displayed. This arises from the generation of discrete or discontinuous values at boundaries between blocks. As a result, when reproduced, the displayed image has a somewhat tessellated or blocky appearance. This effect is more pronounced at high compression ratios.

A number of deblocking approaches have been proposed to eliminate such block artefacts.

A first deblocking approach is applied when the original image is compressed and applies a deblocking algorithm to the quantized blocks. The first deblocking approach requires a component for applying the deblocking algorithm between the quantization unit 15 and the Huffman Coding unit 17. Thus, the image compression encoder 10 has to be re-designed, which causes a problem in that the existing image compression encoder 10 used in general can not be employed.

A second deblocking approach is to apply the Huffman decoding to the compressed image output from the image compression encoder 10, apply the deblocking algorithm, and then apply the Huffman coding again, so as to re-generate a compressed image. The second deblocking approach requires three additional tasks, that is, i) Huffman decoding, ii) deblocking algorithm application, and iii) Huffman coding, which causes problems resulting in the overload to the processor, lower processing rates, and increased power consumption due to the increased load to the processor.

A third deblocking approach is to decompress a compressed image and apply the deblocking algorithm. However, if a consumer's product does not carry out such an algorithm to decompress and reproduce the compressed image, a problem occurs in that the deblocking can not be carried out.

Thus, deblocking processing is required to be performed during the image compression processing and the processor must not have an excessive load upon performing the deblocking processing. It is further required that the existing general image compression encoder 10 has to be employed.

Accordingly, a need exists for a method and apparatus which can prevent the blocking artefacts and reduce the required processing loads and power consumption of the processor.

A method, according to the present invention, is characterised in that a subset of said coefficients are produced by processing the input image signal by a process less susceptible to producing block artefacts.

The method may comprise:

processing the input image signal to produce a first set of coefficients by said process susceptible to producing block artefacts;
processing the input image signal to produce a second set of coefficients by said process less susceptible to producing block artefacts; and
replacing a subset of the first set of coefficients with corresponding coefficients from the second set. Said subset may be determined by identifying regions of the compressed image, represented by the first set of coefficients, in which block artefacts are detected. Alternatively, it may comprise certain coefficients of all pixel blocks of the image.

Preferably, the process susceptible to producing block artefacts comprises determining discrete cosine transform AC coefficients. More preferably, the process less susceptible to producing block artefacts comprises estimating discrete cosine transform AC coefficients from discrete cosine transform DC coefficients for the pixel blocks to which they relate and/or neighbouring pixel blocks. Still more preferably, the process less susceptible to producing block artefacts comprises calculating the estimated AC coefficients for an 8 x 8 pixel block in accordance with:

$$AC_{01} = 1.13885(DC_4 - DC_6)$$

$$AC_{10} = 1.13885(DC_2 - DC_8)$$

$$AC_{20} = 0.27881(DC_2 + DC_8 - 2DC_5)$$

$$AC_{11} = 0.16213((DC_1 - DC_3) - (DC_7 - DC_9))$$

$$AC_{02} = 0.27881(DC_1 + DC_6 - 2DC_5)$$

where $DC_i$ is the DC coefficient of the $i$th pixel block where the 5th pixel block is the block to which the AC coefficients relate and the 1st to 4th and the 6th to 9th pixel blocks are the neighbouring pixel blocks.

Preferably, only the first five AC coefficients are estimated for each pixel block by the process less susceptible to producing block artefacts.

According to the present invention, there is provided an apparatus comprising means for performing a method according to the present invention.

Additional preferred and optional features are set forth in claims 9 to 18 appended hereto.

Embodiments of the present invention will now be described, by way of example, with reference to Figures 2 to 6 of the accompanying drawings, in which:

Figure 1 is a block diagram illustrating a conventional image compression encoder;
Figure 2 is a block diagram illustrating an image compression apparatus for generating and using an assistant image for deblocking processing according to the present invention;
Figure 3 is a flowchart illustrating an image compression method for generating and using an assistant image for deblocking processing according to the present invention;
Figure 4 is a flowchart illustrating an assistant image generation step of Figure 3 in detail;
Figure 5 is a view illustrating an AC coefficient estimation step of Figure 4; and
Figure 6 is a block diagram illustrating another embodiment of the assistant image generation unit for the assistant image generation of Figure 2.

Well-known functions or constructions will not be described in detail since they would obscure the invention in unnecessary detail.

Referring to Figure 2, an image compression apparatus has an assistant image generation unit 110, an image compression part 120 and a deblocking processing part 130.

The assistant image generation unit 110 generates an assistant image using from an input original image. The term "original image" refers to an image which is to be compressed. The term "assistant image" refers to an image to be used for applying the deblocking process to a compressed original image. The deblocking processing refers to the processing to be carried out in the compression step to eliminate the blocking artefacts that can be seen when compressed original images are decompressed and displayed.

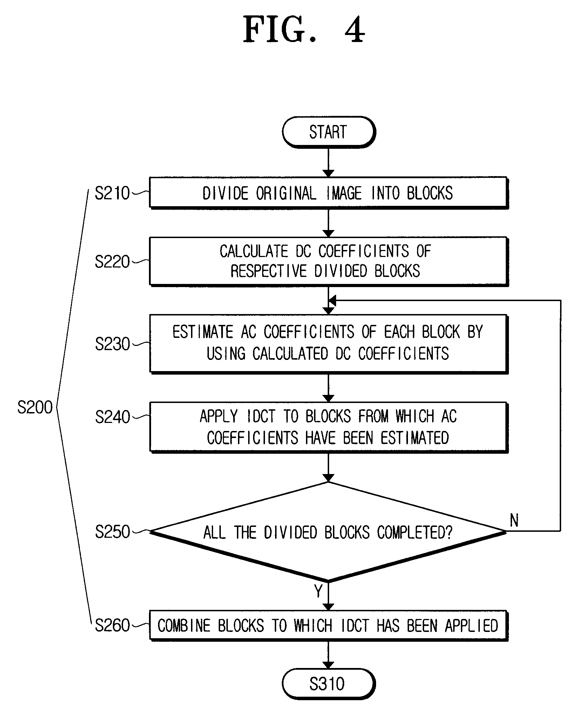

The assistant image generation unit 110 is programmed to implement and algorithm to generate an assistant image. An exemplary algorithm for generating the assistant image is shown in Figure 4 and will be described in greater detail below.

Returning to Figure 2, the image compression part 120 compresses original images to produce compressed images in a predetermined format, an input original image and an assistant image generated from the assistant image generation unit 110. The compression format to be applied can be any suitable format, such as the JPEG, MPEG, H. 261, or H.264 format. The image compression part 120 has an image division unit 121, a DCT unit 123, a quantization unit 125, and a Huffman coding unit 127.

The image division unit 121 divides an input image into square blocks, for example, blocks each having $8 \times 8$

pixels. The DCT unit 123 then applies the DCT to each of the divided blocks. The DCT application transforms the pixel values of the blocks into 1 DC coefficient and 63 AC coefficients.

The quantization unit 125 divides and rounds off the DC coefficient and AC coefficients according to quantization steps so as to eliminate the coefficients smaller than a standard value, thereby leaving only valid coefficients larger than the standard value. The Huffman coding unit 127 applies Huffman coding to the valid coefficients remaining after the quantization process. Therefore, the Huffman coding unit 127 generates and outputs a Huffman code for the DC coefficient (hereinafter, referred to as DC Huffman code) and the Huffman codes for valid AC coefficients (hereinafter, referred to as AC Huffman code).

The deblocking processing part 130 applies the deblocking process to the compressed original image output from the image compression part 120. The deblocking processing uses a compressed assistant image output from the image compression part 120. To achieve this, the deblocking processing part 130 comprises a replacement unit 131 and a storage unit 135.

The storage unit 135 is a buffer for storing a compressed original image.

The replacement unit 131 uses a compressed assistant image to apply the deblocking process to the compressed original image, stored in the storage unit 135. In detail, the replacement unit 131 replaces AC Huffman codes of the compressed original image with AC Huffman codes of an assistant image corresponding to the compressed original image. Furthermore, a new compressed image is output that is finally generated through the Huffman code replacement process.

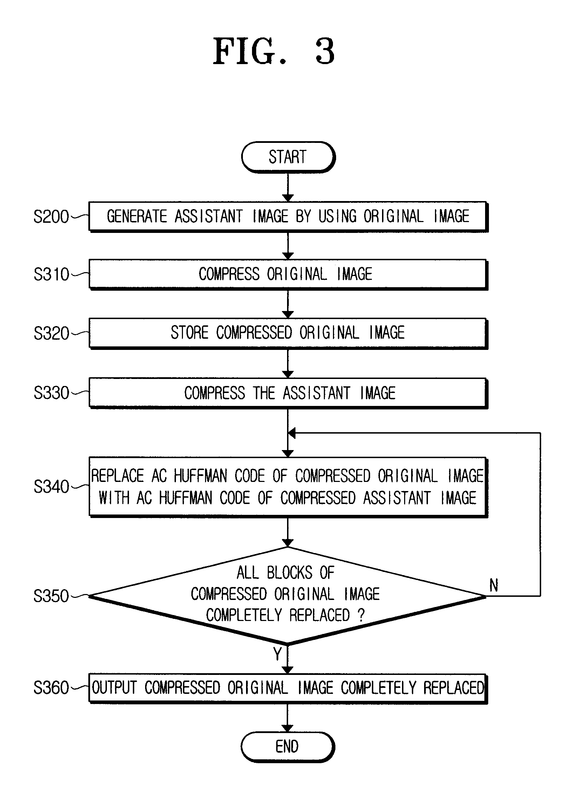

Hereinafter, a description will be made in greater detail of an image compression process performed by the image compression apparatus of Figure 2 with reference to Figure 3.

Referring to Figure 3, an input original image is first used in order for an assistant image to be generated at step (S200). A more detailed description of the assistant image generation step, that is, the step (S200), will now be given with reference to Figure 4.

Referring to Figure 4, the assistant image generation unit 110 divides an input original image into $8\times8$ pixel blocks at step (S210) and computes a DC coefficient for each block at step (S220). The DC coefficient refers to the average pixel value of a block. Therefore, the number of the computed DC coefficients is the same as the number of the blocks.

The assistant image generation unit 110 then uses the computed DC coefficients to estimate the AC coefficients of the individual blocks at step (S230). One block has 63 AC coefficients in total, so 63 AC coefficients can be estimated. However, the estimation of all the AC coefficients can result in an overload, processing delays or the like, due to the increase in the computation necessary therefor. Thus, the assistant image generation unit 110 can be implemented to estimate a smaller number of necessary AC coefficients. The AC coefficients to be estimated are the low-frequency AC coefficients which contain most image information.

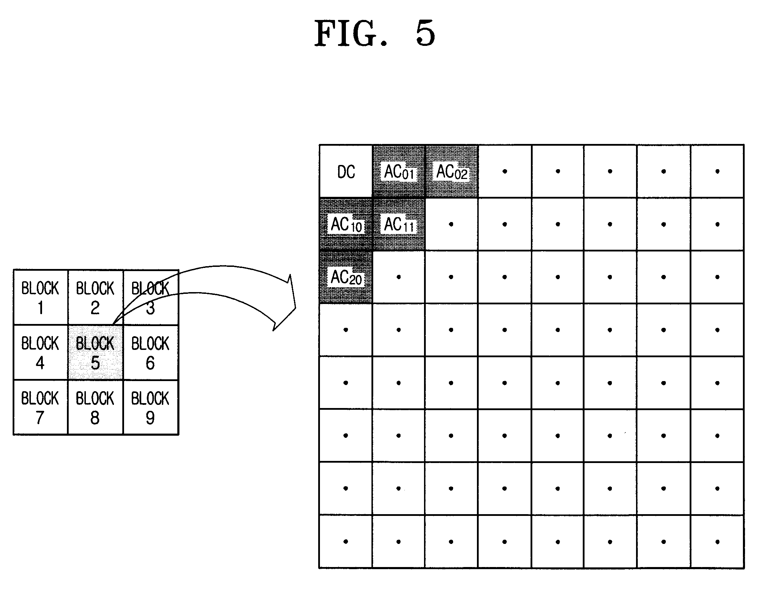

The AC coefficient estimation process of step (S230) will now be described in detail with reference to Figure 5. On the left side of Figure 5, 'block 5' is shown as a shaded block that is enclosed by blocks 1 to 9. On the right side of Figure 5, AC coefficients are shown as shaded blocks that are to be estimated from the AC coefficients of 'block 5'. As shown in Figure 5, the exemplary embodiment of the present invention shown is described as an example wherein only five low-frequency AC coefficients are estimated.

The shaded five AC coefficients $AC_{01}$, $AC_{10}$, $AC_{20}$, $AC_{11}$, and $AC_{02}$ resulting from 'block 5' can be estimated using the DC coefficients of blocks 1 to 9 (with the exception of 'block 5'). Wherein the DC coefficients of blocks 1 to 9 (with the exception of 'block 5') are respectively referred to as 'DC1', 'DC2', ..., 'DC9', estimation formulae, for example Equation (1) below, are used for the estimation of the AC coefficients $AC_{01}$, $AC_{10}$, $AC_{20}$, $AC_{11}$, and $AC_{02}$.

$$
\begin{aligned}
AC_{01} &= 1.13885(DC_4 - DC_6) \\
AC_{10} &= 1.13885(DC_2 - DC_8) \\
AC_{20} &= 0.27881(DC_2 + DC_8 - 2DC_5)
\end{aligned}
\qquad (1)
$$

$$AC_{11} = 0.16213((DC_1 - DC_3) - (DC_7 - DC_9))$$

$$AC_{02} = 0.27881(DC_1 + DC_6 - 2DC_5)$$

Referring to Figure 4, once the estimation of the AC coefficients has been completed, the assistant image generation unit 110 applies the inverse DCT (IDCT) to the blocks for which the AC coefficients have been estimated at step (S240).

The estimation step (S230) and the IDCT step (S240) are applied to each block. When the estimation and IDCT have been applied to all the blocks at step (S250), the assistant image generation unit 110 combines and outputs the blocks, to which the IDCT has been applied at step (S260).

The image produced and output through the above process becomes the assistant image. The important characteristics achieved in producing the assistant image is the estimate of the AC coefficients of each block by using the DC coefficients of the respective divided blocks, which is effective in preventing the block artefacts.

A process that will be carried out after the assistant image generation step (S200) will now be described with reference to Figure 3.

The image compression part 120 compresses and outputs an input original image in a predetermined format at step (S310), and the output compressed original image is temporarily stored in the storage unit 135 of the deblocking processing part 130 at step (S320). The compression process is a process of applying the Huffman coding to valid coefficients remaining after the division, DCT, and quantization of the original image. Thus, only the DC Huffman codes and AC Huffman codes of the compressed original image are output from the image compression part 120 and temporarily stored in the storage unit 135.

The image compression part 120 then compresses and outputs, in a predetermined format, the assistant image produced from the assistant image generation unit 110 at step (S330). The image compression part 120 outputs the DC Huffman codes and AC Huffman codes of the compressed assistant image.

The replacement unit 131 then replaces AC Huffman codes of the compressed original image, stored in the storage unit 135, with AC Huffman codes of the compressed assistant image at step (S340). The replacement process is carried out block by block. As shown in Figure 5, five AC coefficients $AC_{01}$, $AC_{10}$, $AC_{20}$, $AC_{11}$, and $AC_{02}$ are estimated for each block of the assistant image, and the remaining coefficients are treated as '0'. Thus, the Huffman codes for the five AC coefficients are the AC Huffman codes of the compressed assistant image used for the replacement.

The replacement process of the step (S340) is carried out block by block. Once the replacement process is completed with respect to all the blocks of the compressed original image at step (S350), the compressed original image that has been completely replaced and stored in the storage unit 135 is output at step (S360). The output image is the compressed image to which the deblocking processing has been applied.

As noted above, the assistant image generation unit 110 has been configured to generate an assistant image using a program implementing the algorithm of Figure 4. In Figure 5, the assistant image generation unit 110 computes 1 DC coefficient per block and estimates 5 AC coefficients, which requires less processing when considering that, in general, 64 coefficients are processed when the DCT and quantization are applied. Thus, the assistant image generation unit 110 has less required computation amounts, so it can be implemented through software applications.

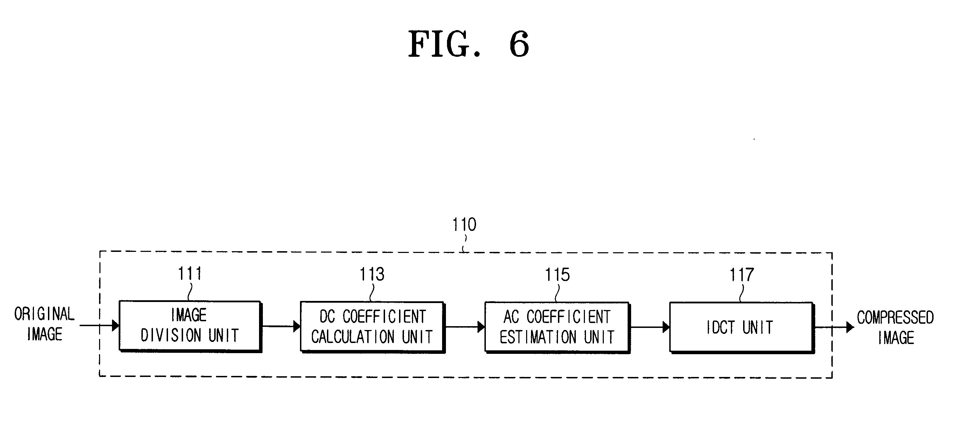

However, in yet another embodiment of the present invention the assistant image generation unit 110 can be implemented in hardware, which is shown in Figure 6.

Referring to the exemplary embodiment of Figure 6, the assistant image generation unit 110 has an image division unit 111 for dividing an input original image into square blocks of $8 \times 8$ pixels, a DC coefficient calculation unit 113 for calculating the DC coefficients of the respective divided blocks, an AC coefficient estimation unit 115 for estimating the AC coefficients of the individual blocks using the calculated DC coefficients, and an IDCT 117 for applying the IDCT to the blocks for which the AC coefficients have been estimated.

The assistant image generated by the assistant image generation unit 110 shown in Figure 6 is substantially the same as the assistant image generated by the process described as above.

As described above, the present invention can generate an assistant image for an original image and apply the deblocking process using the same when the original image is compressed. Since the deblocking process is carried out in the image compression process, the present invention can prevent the blocking artefacts even in cases where a consumer's product for decompressing and reproducing the compressed images is not a deblocking means. Further, the present invention enables the existing general image compression encoder to be used without change, and can result in reducing the processing load, increasing a processing rate, and reducing power consumption of the processor due to less computation amounts required for the deblocking processing.

## Claims

1. An image compression method comprising processing an input image signal to produce a set of coefficients, using, at least in respect of some coefficients, a process susceptible to producing block artefacts, **characterised in that** a subset of said coefficients are produced by processing the input image signal by a process less susceptible to producing block artefacts.

**2.** A method according to claim 1, comprising:

processing the input image signal to produce a first set of coefficients by said process susceptible to producing block artefacts;
processing the input image signal to produce a second set of coefficients by said process less susceptible to producing block artefacts; and
replacing a subset of the first set of coefficients with corresponding coefficients from the second set.

**3.** A method according to claim 1 or 2, wherein the process susceptible to producing block artefacts comprises determining discrete cosine transform AC coefficients.

**4.** A method according to claim 3, the process less susceptible to producing block artefacts comprises estimating discrete cosine transform AC coefficients from discrete cosine transform DC coefficients for the pixel blocks to which they relate and/or neighbouring pixel blocks.

**5.** A method according to claim 4, wherein the process less susceptible to producing block artefacts comprises calculating the estimated AC coefficients for an 8 x 8 pixel block in accordance with:

$$AC_{01} = 1.13885(DC_4 - DC_6)$$

$$AC_{10} = 1.13885(DC_2 - DC_8)$$

$$AC_{20} = 0.27881(DC_2 + DC_8 - 2DC_5)$$

$$AC_{11} = 0.16213((DC_1 - DC_3) - (DC_7 - DC_9))$$

$$AC_{02} = 0.27881(DC_1 + DC_6 - 2DC_5)$$

where $DC_i$ is the DC coefficient of the $i$th pixel block where the 5th pixel block is the block to which the AC coefficients relate and the 1st to 4th and the 6th to 9th pixel blocks are the neighbouring pixel blocks.

**6.** A method according to any preceding claim, wherein only the first five AC coefficients are estimated for each pixel block by the process less susceptible to producing block artefacts.

**7.** A method according to claim 2, wherein said subset is determined by identifying regions of the compressed image, represented by the first set of coefficients, in which block artefacts are detected.

**8.** An apparatus comprising means for performing a method according to any preceding claim.

**9.** An image compression apparatus, comprising:

an assistant image generation unit for generating an assistant image by using an original image;
an image compression part for compressing the original image and the generated assistant image; and
a deblocking processing part for applying deblocking processing to the compressed original image by using the compressed assistant image.

**10.** The image compression apparatus as claimed in claim 9, wherein the assistant image generation unit is configured to divide the original image into plural blocks, estimate AC coefficients of the divided blocks by using DC coefficients of the divided blocks, and generate the assistant image.

**11.** The image compression apparatus as claimed in claim 9, wherein the deblocking processing part is configured to replace predetermined coefficient information of the compressed original image with coefficient information corresponding to the compressed assistant image.

**12.** The image compression apparatus as claimed in claim 11, wherein the coefficient information comprises AC coefficient information.

**13.** The image compression apparatus as claimed in claim 12, wherein the AC coefficient information comprises a Huffman code with respect to the AC coefficients.

**14.** An image compression method, comprising steps of:

generating an assistant image by using an original image;
compressing the original image and the generated assistant image; and
applying deblocking processing to the compressed original image by using the compressed assistant image.

**15.** The image compression method as claimed in claim 14, wherein the step of generating an assistant image comprises the steps of:

dividing the original image into plural blocks;
calculating DC coefficients of the divided blocks; and
estimating AC coefficients of the divided blocks by using the calculated DC coefficients.

**16.** The image compression method as claimed in claim 14, wherein the step of applying the deblocking processing comprises the step of:

replacing predetermined coefficient information of the compressed original image with coefficient information corresponding to the compressed assistant image.

**17.** The image compression method as claimed in claim 16, wherein the coefficient information comprises AC coefficient information.

**18.** The image compression method as claimed in claim 17, wherein the AC coefficient information comprises a Huffman code with respect to the AC coefficients.

# FIG. 1

ORIGINAL IMAGE → [11 IMAGE-DIVIDING UNIT] → [13 DCT UNIT] → [15 QUANTIZATION UNIT] → [17 HUFFMAN CODING UNIT] → COMPRESSED IMAGE (10)

# FIG. 2

[110 ASSISTANT IMAGE GENERATION UNIT]

ORIGINAL IMAGE → [121 IMAGE DIVISION UNIT] → [123 DCT UNIT] → [125 QUANTIZATION UNIT] → [127 HUFFMAN CODING UNIT] (120) → [131 REPLACEMENT UNIT] → COMPRESSED IMAGE

[135 STORAGE UNIT] (130)

EP 1 589 762 A1

# FIG. 3

START

S200 — GENERATE ASSISTANT IMAGE BY USING ORIGINAL IMAGE

S310 — COMPRESS ORIGINAL IMAGE

S320 — STORE COMPRESSED ORIGINAL IMAGE

S330 — COMPRESS THE ASSISTANT IMAGE

S340 — REPLACE AC HUFFMAN CODE OF COMPRESSED ORIGINAL IMAGE WITH AC HUFFMAN CODE OF COMPRESSED ASSISTANT IMAGE

S350 — ALL BLOCKS OF COMPRESSED ORIGINAL IMAGE COMPLETELY REPLACED ?   N

Y

S360 — OUTPUT COMPRESSED ORIGINAL IMAGE COMPLETELY REPLACED

END

# FIG. 4

```
                        ┌─────────┐
                        │  START  │
                        └─────────┘
                             │
                             ▼
S210 ─┌──────────────────────────────────────────────┐
      │      DIVIDE ORIGINAL IMAGE INTO BLOCKS        │
      └──────────────────────────────────────────────┘
                             │
                             ▼
S220 ─┌──────────────────────────────────────────────┐
      │          CALCULATE DC COEFFICIENTS OF         │
      │           RESPECTIVE DIVIDED BLOCKS           │
      └──────────────────────────────────────────────┘
                             │
                             ▼
S230 ─┌──────────────────────────────────────────────┐
      │   ESTIMATE AC COEFFICIENTS OF EACH BLOCK BY   │
      │       USING CALCULATED DC COEFFICIENTS        │
      └──────────────────────────────────────────────┘
                             │
                             ▼
S240 ─┌──────────────────────────────────────────────┐
      │      APPLY IDCT TO BLOCKS FROM WHICH AC       │
      │      COEFFICIENTS HAVE BEEN ESTIMATED         │
      └──────────────────────────────────────────────┘
                             │
                             ▼
S250 ─◇──────────────────────────────────────────────◇  N
      ◇     ALL THE DIVIDED BLOCKS COMPLETED?         ◇───
      ◇──────────────────────────────────────────────◇
                             │ Y
                             ▼
S260 ─┌──────────────────────────────────────────────┐
      │  COMBINE BLOCKS TO WHICH IDCT HAS BEEN APPLIED│
      └──────────────────────────────────────────────┘
                             │
                             ▼
                        ┌─────────┐
                        │  S310   │
                        └─────────┘
```

S200

# FIG. 5

| DC | $AC_{01}$ | $AC_{02}$ | • | • | • | • | • |
|----|-----------|-----------|---|---|---|---|---|
| $AC_{10}$ | $AC_{11}$ | • | • | • | • | • | • |
| $AC_{20}$ | • | • | • | • | • | • | • |
| • | • | • | • | • | • | • | • |
| • | • | • | • | • | • | • | • |
| • | • | • | • | • | • | • | • |
| • | • | • | • | • | • | • | • |
| • | • | • | • | • | • | • | • |

| BLOCK 1 | BLOCK 2 | BLOCK 3 |
|---------|---------|---------|
| BLOCK 4 | BLOCK 5 | BLOCK 6 |
| BLOCK 7 | BLOCK 8 | BLOCK 9 |

# FIG. 6

ORIGINAL IMAGE → **111** IMAGE DIVISION UNIT → **113** DC COEFFICIENT CALCULATION UNIT → **115** AC COEFFICIENT ESTIMATION UNIT → **117** IDCT UNIT → COMPRESSED IMAGE

110

**European Patent Office**

**EUROPEAN SEARCH REPORT**

Application Number

EP 05 10 2428

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 577 363 A (LORAL AEROSPACE CORPORATION) 5 January 1994 (1994-01-05) | 1,8,9,14 | H04N7/26 H04N7/34 |
| Y | * abstract; figure 1 * | 10-13, 15-18 | |
| | ----- | | |
| X | LAKHANI G: "IMPROVED IMAGE REPRODUCTION FROM DC COMPONENTS" OPTICAL ENGINEERING, SOC. OF PHOTO-OPTICAL INSTRUMENTATION ENGINEERS. BELLINGHAM, US, vol. 35, no. 12, December 1996 (1996-12), pages 3449-3452, XP000678971 ISSN: 0091-3286 | 1-8 | |
| Y | * the whole document * | 10-13, 15-18 | |
| | ----- | | |
| A | EP 0 801 506 A (EASTMAN KODAK COMPANY) 15 October 1997 (1997-10-15) * claim 1; figure 2 * | 1-18 | |
| | ----- | | |
| A | TIEN C-N ET AL: "TRANSFORM-DOMAIN POSTPROCESSING OF DCT-CODED IMAGES" SPIE VISUAL COMMUNICATIONS AND IMAGE PROCESSING, vol. 2094, no. PART 3, 8 November 1993 (1993-11-08), pages 1627-1638, XP002057987 * paragraph [0004] * | 1-18 | **TECHNICAL FIELDS SEARCHED (Int.Cl.7)** H04N |
| | ----- | | |
| A | YUUJI IZAWA ET AL: "IMPROVEMENT OF PICTURE QUALITY AND CODING EFFICIENCY USING DISCRETE COSINE TRANSFORM" ELECTRONICS & COMMUNICATIONS IN JAPAN, PART I - COMMUNICATIONS, SCRIPTA TECHNICA. NEW YORK, US, vol. 73, no. 6, 1 June 1990 (1990-06-01), pages 12-21, XP000170744 ISSN: 8756-6621 * paragraph [04.2] * | 1-18 | |
| | ----- | | |
| | -/-- | | |

The present search report has been drawn up for all claims

| Place of search | Date of completion of the search | Examiner |
|---|---|---|
| The Hague | 16 August 2005 | Georgiou, G |

EPO FORM 1503 03.82 (P04C01)

**European Patent Office**

## EUROPEAN SEARCH REPORT

Application Number

EP 05 10 2428

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MUZAFFAR T ET AL: "Maximum video compression using AC-coefficient prediction" TENCON 99. PROCEEDINGS OF THE IEEE REGION 10 CONFERENCE CHEJU ISLAND, SOUTH KOREA 15-17 SEPT. 1999, PISCATAWAY, NJ, USA,IEEE, US, vol. 1, 15 September 1999 (1999-09-15), pages 581-584, XP010368250 ISBN: 0-7803-5739-6 * the whole document * ----- | 1-18 | |
| A | US 2003/053711 A1 (KIM CHANGICK) 20 March 2003 (2003-03-20) * abstract * * paragraph [0045] * ----- | 1-18 | |

TECHNICAL FIELDS SEARCHED (Int.Cl.7)

The present search report has been drawn up for all claims

| Place of search | Date of completion of the search | Examiner |
|---|---|---|
| The Hague | 16 August 2005 | Georgiou, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

EP 1 589 762 A1

## ANNEX TO THE EUROPEAN SEARCH REPORT
## ON EUROPEAN PATENT APPLICATION NO.

EP 05 10 2428

16-08-2005

| Patent document cited in search report | | Publication date | Patent family member(s) | | Publication date |
|---|---|---|---|---|---|
| EP 0577363 | A | 05-01-1994 | US | 5289548 A | 22-02-1994 |
| | | | CA | 2097951 A1 | 31-12-1993 |
| | | | DE | 69320117 D1 | 10-09-1998 |
| | | | DE | 69320117 T2 | 22-04-1999 |
| | | | EP | 0577363 A1 | 05-01-1994 |
| | | | JP | 3182260 B2 | 03-07-2001 |
| | | | JP | 6224769 A | 12-08-1994 |
| EP 0801506 | A | 15-10-1997 | US | 5737451 A | 07-04-1998 |
| | | | EP | 0801506 A2 | 15-10-1997 |
| US 2003053711 | A1 | 20-03-2003 | NONE | | |